# EUROPEAN PATENT APPLICATION

(11) **EP 1 271 101 A2**
(43) Date of publication of application: **02.01.2003**
(21) Application number: 02014420.0
(22) Date of filing: 28.06.2002
(51) Int. Cl.: G01C 21/26

(54) **Navigation system, device and method receiving a location identifier**

(30) Priority: 29.06.2001 US 301915 P
(71) Applicant: Stephens, Spencer, Toluca Lake, CA 91602 (US)
(72) Inventor: Stephens, Spencer, Toluca Lake, CA 91602 (US)
(74) Representative: Ferreccio, Rinaldo

(57) **Abstract**

A navigator receives a location identifier such as an address via signal transmission and calculates a route to or from the identified location. By transmitting a starting location and/or a destination to a navigator, one can eliminate the need for entering this information manually. For example, one typically stores addresses in a device such as a computer, Personal Digital Assistant (PDA), or cellular telephone. But instead of accessing an address and then manually entering it into the navigator, one can cause the device to download the address to the navigator via signal transmission. This saves time and reduces the chance of errors as compared to manual entry. Alternatively, the navigator can receive the location identifier from a data-storage medium such as a CD-ROM or from a data-storage device such as a memory card.

## Description

This application claims priority from U.S. Patent App. Ser. No. 60/301,915, which was filed on June 29, 2001 and which is incorporated by reference.

### BACKGROUND OF THE INVENTION

A high-end Global Positioning System (GPS) navigator can determine a route from a specified starting location to a specified destination and can guide a traveler along the route. A GPS navigator determines its current location on the surface of the earth by triangulating signals from GPS satellites and can determine the distance and direction of another known location with respect to the current location. To map a route, the traveler first specifies the starting location and destination. Alternatively, the navigator may use its current location as the starting location so that the traveler need only specify the destination. Next, the navigator calculates and stores a route between the starting location and destination. Then, the navigator guides the traveler along the route by monitoring his position and providing him directions such as where to make a turn. The navigator may be portable such that the traveler can carry it with him, or it may be installed in a vehicle such as an automobile.

The traveler typically specifies the starting location (if necessary) and the destination by entering them into the GPS navigator using the navigator's input interface, which can be, e.g., a keypad, a touch screen, or voice-recognition interface. For standard locations in the United States, the traveler typically enters a street address that includes the number and name of the street, city, state, and zip code. For well-known locations such as the White House or the Grand Canyon, the navigator may allow the traveler to merely enter the location name.

Unfortunately, entering the starting location and/or destination using the GPS navigator's input interface is often time-consuming and prone to error. Typically, the traveler looks up the starting address and/or destination address in his address book and then manually enters them into the navigator. Because most addresses are relatively long, it is often cumbersome and time consuming to enter the address(es) manually. Furthermore, if the navigator is installed in a rental car, the traveler may be unfamiliar with the entry procedure, and this unfamiliarity may frustrate the traveler as well as increase the time required to enter the address(es). In addition, the traveler may make an entry error, such as pressing the wrong key, and thus may enter an incorrect address. Such an error typically increases the entry time, and, if not discovered, may result in the navigator calculating, and the traveler following, a route to an undesired destination!

### SUMMARY OF THE INVENTION

In one aspect of the invention, a navigator receives a destination identifier via transmission or from a storage media and determines a route to the destination.

By transmitting a starting location and/or a destination to a navigator, one can eliminate the need for entering this information manually. For example, one typically stores addresses in a device such as a computer, Personal Digital Assistant (PDA), or cellular telephone. Instead of accessing an address and then manually entering it into the navigator, one can cause the device to upload the address to the navigator via signal transmission. This saves time and reduces the chance of errors as compared to manual entry.

### BRIEF DESCRIPTION OF THE DRAWINGS

FIG. 1 is a block diagram of an location-identifier storage device in communication with a navigator according to an embodiment of the invention.

FIG. 2 is a flow chart describing the operation of the location-identifier storage device and navigator of FIG. 1 according to an embodiment of the invention.

FIG. 3 is a block diagram of a navigator according to another embodiment of the invention.

FIG. 4 is a diagram of a vehicle that incorporates the navigator of FIG. 1 or the navigator of FIG. 3 according to an embodiment of the invention.

### DESCRIPTION OF THE PREFERRED EMBODIMENTS

The following discussion is presented to enable one skilled in the art to make and use the invention. Various modifications to the disclosed embodiments will be readily apparent to those skilled in the art, and the generic principles herein may be applied to other embodiments and applications without departing from the spirit and scope of the present invention as defined by the appended claims. Thus, the present invention is not intended to be limited to the embodiments shown, but is to be accorded the widest scope consistent with the principles and features disclosed herein.

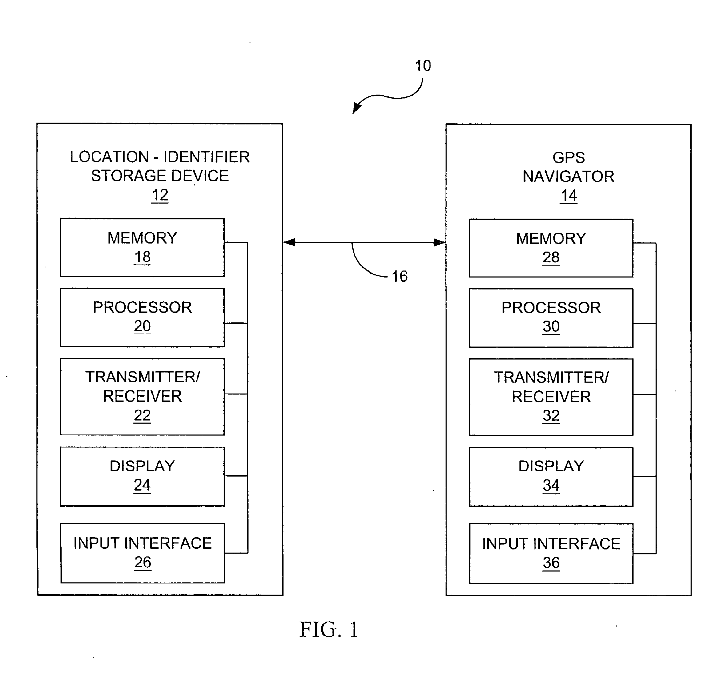

FIG. 1 is a block diagram of a navigation system 10, which includes a location-identifier storage device 12 that can communicate with a GPS navigator 14 via a path 16 according to an embodiment of the invention. The device 12 stores location identifiers such as addresses and can upload one or more of these addresses to the navigator 14 as starting or destination addresses. After receiving the starting and/or destination addresses, the navigator 14 determines a route to the destination and guides a traveler (not shown) along the route. The device 12 may also store the names of famous locations such as the Grand Canyon and upload such names to the navigator 14 to identify a famous starting location and/or famous destination. By uploading a location identifier to the navigator 14 instead of entering the identifier manually, one saves time and reduces the chance of errors in the uploaded identifier.

The device 12, which may be a computer, PDA, cell phone, server, or other device able to store location data, includes a memory 18, processor 20, transmitter/receiver 22, display 24, and input interface 26. The memory 18 can store address information for one or more contact persons (not shown), and may store such information in a format such as the known vCard format using a software application such as Microsoft Outlook®. One can enter such information into the memory 18 manually via the input interface 26, which is typically a keyboard, keypad, or touch screen. Or, one can load such information into the memory 18 from another device, from an email attachment, or via the internet.

The GPS navigator 14 includes a memory 28, processor 30, transmitter/receiver 32, display 34, and input interface 36. The memory 28 stores map and route information for one or more regions. One can enter such information into the memory 18 manually via the input interface 26, which is typically a keyboard, keypad, or touch screen. Or, one can load such information into the memory 18 from the device 12, from another device, or via the internet. Alternatively, the manufacturer of the navigator 14 may preprogram such information into the memory 28.

The path 16 allows the device 12 to send a location identifier to the navigator 14 via signal transmission, and typically allows other communications between the device and the navigator. For example, the path 16 may be a wireless radio-frequency (RF) or infrared channel that carries RF or infrared signals. Alternatively, the path 16 may include a cable that carries optical or electrical signals. For example, the path 16 may include a conventional RS-232 cable coupled between the device 12 and the navigator 14.

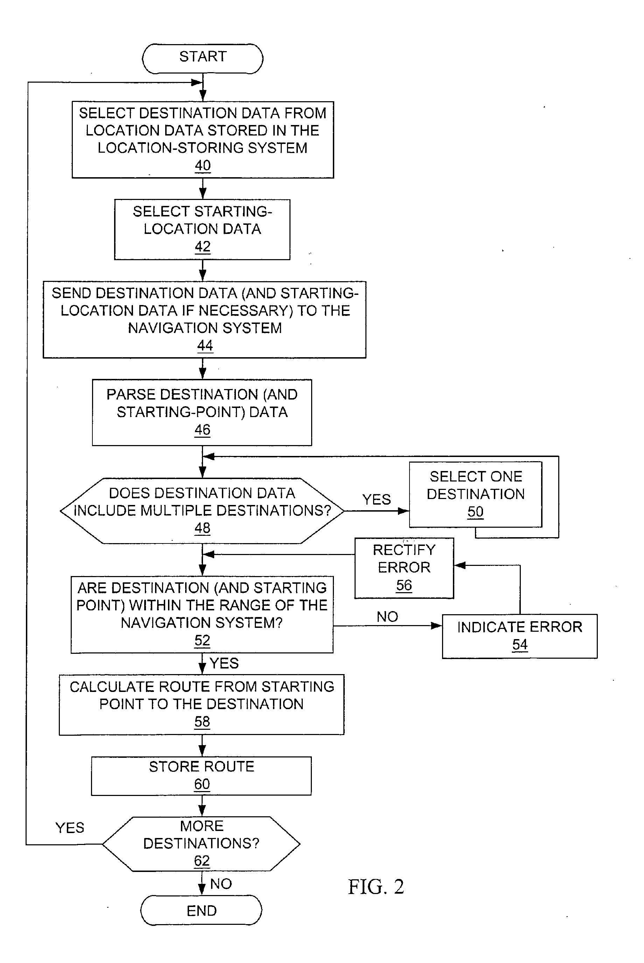

Referring to FIG. 1 and to the flow chart of FIG. 2, a routing procedure for the navigation system 10 is discussed according to an embodiment of the invention. For purposes of explanation, it is assumed that addresses, not proper names, of the starting location and the destination are used, and that these addresses were previously stored in the memory 18 of the device 12.

Referring to step 40, a traveler (not shown) first retrieves the destination address from the addresses stored in the memory 18 of the device 12. For example, the traveler uses the input interface 26 to activate a software application such as Microsoft Outlook® and to select the contact entry having the desired destination address.

Referring to step 42, the traveler then retrieves the start address from the memory 18 in a similar manner. Alternatively the traveler can skip step 42 if the navigator 14 uses its current location as the starting location.

Referring to step 44, the traveler then causes the device 12 to transmit the retrieved destination and starting addresses to the navigator 14. For example, the traveler may view a menu (not shown) on the display 24 and use the input interface 26 to select a transmit-address function from the menu. In response to this selection, the processor 20 couples the selected addresses from the memory 18 to the transmitter/receiver 22, which downloads these addresses to the navigator 14 via the path 16.

Referring to step 46, the navigator 14 parses the received addresses. More specifically, the processor 30 separates the starting and destination addresses and converts them into a format that is compatible with the software application that the processor 30 is executing.

Referring to step 48, the navigator 14 determines whether it has received more than one starting and/or destination address. Sometimes, a contact entry in the software application run by the device 12 includes multiple addresses. For example, the entry may include a contact's home address and business address. If the traveler does not select one of these addresses, but merely selects the entire contact entry, then the device 12 may send both the home and business addresses to the navigator 14 as either the starting address or the destination address. The navigator's processor 30 is programmed such that it will not determine a route if the starting and/or destination address is ambiguous. This prevents the processor 30 from determining, and prevents the traveler from following, and undesired route.

Referring to step 50, if the navigator 14 determines that it has received more than one starting or destination address, then displays a message on the display 34 so that the traveler can select the desired address using the input interface 36. In response to the traveler's selection, the selected address is marked for use by the navigator 14. Alternatively, the navigator 14 sends a request to the device 12 for clarification. In response to this request, the device's processor 20 displays this request on the display 24 so that the traveler can select the desired address using the input interface 26. In response to the traveler's selection, the processor 20 causes the transmitter/receiver 22 to send the selected address to the navigator 14.

Referring to step 52, once the navigator 14 has a single start address and a single destination address, it determines whether both of these addresses are within a navigation region for which the navigator stores map information.

Referring to step 54, if the start address and/or the destination address are not within the navigator's navigation region, then the processor 30 displays an "out of region" message on the display 34, and gives the traveler one or more options for correcting the error. For example, the traveler may have the option of changing an out-of-region address to an in-region address, loading the navigator 14 with map data for a region that includes both the starting and destination addresses, and/or canceling the routing procedure. If the traveler chooses to load new map data, then he may initiate such loading via the input interface 26 of the device 12 or via the input interface 36 of the navigator 14. The navigator 14 loads the new map data as discussed above in conjunction with FIG. 1. Alternatively, the processor 30 sends the out-of-region error message to the device 12. Referring to step 56, in response to the out-of-region error message from the navigator 14, the device 12 attempts to rectify the error. Specifically, the device's processor 20 displays an "out of region" message on the display 24.

The traveler then has one or more options such as the above-described options for correcting the error.

Referring to step 58, once the navigator 14 determines that the start and destination addresses are within the navigation region, it calculates a route from the starting address to the destination address. Specifically, the processor 30 causes the display 34 to display a request that the traveler confirm that the starting and destination addresses are correct. In response to this request, the traveler uses the input interface 36 to either confirm or deny the accuracy of the addresses. If the traveler confirms the accuracy of the addresses, then the processor 30 calculates the route. If one or both of the addresses are incorrect, the traveler can enter correct addresses by restarting the routing procedure at step 40.

Still referring to step 58, alternatively, the processor 30 may send a request to the device 12 to confirm that the start and destination addresses are correct. In response to this request, the processor 20 causes the display 24 to display this request, and the traveler uses the input interface 26 to either confirm or deny the accuracy of the addresses. If the traveler confirms the accuracy of the addresses, then the processor 20 sends a confirmation to the processor 30 via the path 16, and in response to this confirmation, the processor 30 calculates the route. If one or both of the addresses are incorrect, the traveler can enter correct addresses by restarting the routing procedure at step 40.

Referring to step 60, once the navigator 14 calculates a route between the starting and destination addresses, it stores the route in the memory 28.

Referring to step 62, the processor 30 causes the display 34 to display a request to the traveler "asking" whether there are any other destinations that the traveler wishes to visit. Alternatively, the navigator 14 asks the device 12 whether there are any other destinations that the traveler wants to visit. For example, a traveler may want to travel to one destination, stay for a while, then travel to another destination, and so on. If the traveler does wish to visit additional destinations, then he selects the additional destination addresses by repeating the routing procedure starting at step 40.

Once the navigator 14 has received all destination addresses and has determined the route through and/or to these destinations, the processor 30 ends the routing procedure.

When the traveler decides to travel, he activates the navigator 14, selects the route stored in the memory 28, and causes the navigator to navigate him along the selected route in a conventional manner.

Still referring to FIGS. 1 and 2, other embodiments of the route-determination routine are contemplated. For example, instead of initiating the routine from the device 12, the traveler may initiate the routine from the navigator 14 such that the navigator initiates communication with the device and causes the device to download the desired starting location and destination. Furthermore, although a GPS navigator is discussed, the navigator 14 may be another type of navigator. Moreover, once the navigator 14 receives the desired starting location and/or destination from the device 12, the traveler may initiate/perform one or more of the steps of the routing procedure from the navigator via the input interface 36.

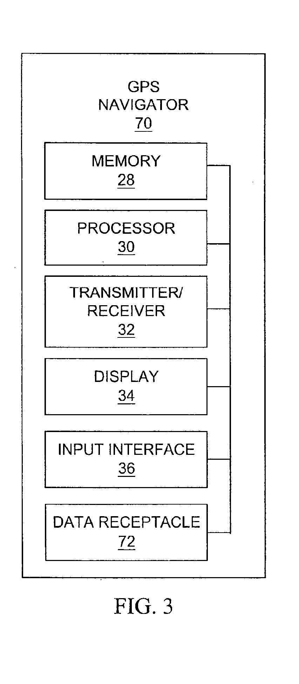

FIG. 3 is a block diagram of a GPS navigator 70 according to another embodiment of the invention, where like numbers refer to like components with respect to the navigator 14 of FIG. 1. The navigator 70 is similar to the navigator 14 except that it also includes a data receptacle 72, which allows a traveler (not shown) to download a starting location and/or a destination from a data-storage media such as a floppy disk or a CD-ROM or from a data-storage device such as a memory card. For example, the traveler may wish to download a destination address from a CD-ROM that includes address and telephone listings for everyone in the U.S. Like the downloading of starting-location and destination information from the device 12 as discussed above in conjunction with FIGS. 1 and 2, downloading from a data-storage media or device is typically faster and more accurate than manual entry. Furthermore, although the traveler may use the device 12 to implement the routing procedure of FIG. 2, he may also use the input interface 36 of the navigator 70 to implement this routine.

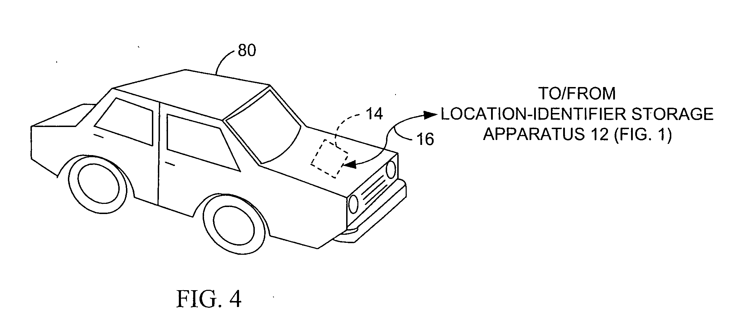

FIG. 4 is a view of an automobile 80 that incorporates the navigator 14 and/or the navigator 70 of FIGS. 1 and 3 according to an embodiment of the invention. For example purposes, the automobile 80 is hereinafter discussed as including only the navigator 14. In operation, a traveler downloads a start location and/or a destination to the navigator 14 using the routing procedure discussed above in conjunction with FIG. 2 or using a similar procedure. Alternatively, a traveler can use the routing procedure discussed below for the specific embodiment of the navigator 14 discussed below.

Still referring to FIG. 4, a specific implementation of the navigator 14 and a corresponding routing procedure are discussed according to an embodiment of the invention. The navigator 14 is mounted to the dashboard (not shown) of the automobile 80, and is implemented with a Compaq iPAQ 3870 pocket personal computer (PC) running a Microsoft PocketPC 2002 operating system and a CF-card or PCMCIA sleeve into which is installed a Wireless GPS Card for iPAQ Pocket PCs, and includes a booster antenna coupled to the GPS Card and mounted in a suitable location in or on the automobile 80. The iPAQ is powered from a permanent connection to the power system (not shown) of the automobile 80, or is connected to the auto's cigarette lighter (not shown) via a power cord (not shown). The iPAQ is loaded with GPS software and street maps for the desired navigation region and with an address-download software application that allows it to receive start and/or destination addresses from the device 12 (FIG. 1). This software application may be written in any programming language supported on the PocketPC 2002 platform such .NET Visual Basic. Furthermore, the iPAQ communicates with the apparatus 12 over a wireless path 16 (FIG. 1) according to either the Bluetooth (RF) or InfraRed Data Association (IRDA) standards.

Next, an example procedure for uploading a destination address to the navigator 14 is discussed. This procedure assumes that the navigator 14 uses its current location as the starting location and that the device 12 is a Palm m500 PDA with a Palm Bluetooth module.

First, the navigator 14 is configured according to the manufacturer's instructions to power up with the Bluetooth manager software enabled, and to "autorun" the address-download software application.

Next, to begin the routing procedure, the traveler powers on his m500, selects the address-book function, and locates the entry, in the form of a previously stored vCard, that contains the destination address.

[39] Then, the traveler initiates transmission of the vCard from the m500 to the navigator 14. Specifically, with the vCard open on the display of the m500, the traveler selects the item "Send Address" on the "[Address] Record" menu. Next, a "Send With" window appears on the m500 and offers the traveler transmission choices including "Bluetooth". Then, the traveler selects "Bluetooth" and waits a few seconds while the m500 "locates" the navigator 14. Once the m500 locates the navigator 14, it displays a window "Discovery Results," and the traveler selects the navigator from the available choices and then selects "OK". At this point, the m500 transmits the vCard containing the destination address to the navigator 14.

Then, the Bluetooth manager of the navigator 14 accepts the vCard and stores it in a predetermined directory known to the address-download software application.

Next, the address-download software application detects the arrival of the vCard and opens it. As discussed above in conjunction with FIGS. 1 and 2, if more than one address is present in the vCard, the address-download software application displays the choices on the display screen of the navigator 14 or on the display screen of the m500 and alerts the traveler that he needs to select one address. The traveler then selects the desired address.

Once the address-download software application has determined the destination address from the vCard, it translates this address from the vCard format to the native format of the GPS software and initiates a route calculation in the GPS software.

Next, the GPS software calculates the route to the destination and guides the traveler to the destination in the same way it would have had the traveler entered the destination address manually through the navigator's input interface.

Although the navigator 14 is disclosed as being located in an automobile 80, the navigator may be located in other types of vehicles such as, e.g., a truck, train, boat, plane, motorcycle, or spacecraft. Furthermore, although described as guiding the traveler along the route, the navigator 14 may be designed to directly control the speed, steering, and/or other functions of the automobile 80. Moreover, although described as a Palm m500 PDA, the device 12 may be any other device capable of uploading allocation identifier such as an address to the navigator 14.

## Claims

1. A navigator, comprising:
a receiver operable to receive a first identifier that identifies a destination; and
a processor coupled to the receiver and operable to determine a route to the destination.

2. The navigator of claim 1 wherein the receiver is operable to receive the first identifier from a remote device.

3. The navigator of claim 1, further comprising:
wherein the receiver is operable to receive the first identifier from a remote device; and
a transmitter for sending data to the device.

4. The navigator of claim 1 wherein the receiver is operable to receive the first identifier from a data-storage medium.

5. The navigator of claim 1 wherein the receiver is operable to receive the first identifier via a wireless path.

6. The navigator of claim 1 wherein the receiver is operable to receive the identifier via a cable.

7. The navigator of claim 1 wherein the processor is operable to determine the route from a starting location.

8. The navigator of claim 1 wherein:
the receiver is operable to receive a second identifier that identifies a starting location; and
the processor is operable to determine the route from the starting location.

9. A vehicle, comprising:
a navigator that includes,
a receiver operable to receive an identifier that identifies a destination; and
a processor coupled to the receiver and operable to determine a route to the destination.

10. The vehicle of claim 9 wherein the processor is operable to navigate the vehicle along the determined route.

11. The vehicle of claim 9 wherein the processor is operable to assist an operator in navigating the vehicle along the determined route.

12. A system, comprising:
a navigator, comprising,
a receiver operable to receive a first identifier that identifies a destination, and
a processor operable to determine a route to the destination; and
a remote device, comprising,
a transmitter operable to send the first identifier to the navigator.

13. The system of claim 12 wherein the remote apparatus comprises a processor coupled to the transmitter and operable to receive the first identifier and to provide the first identifier to the transmitter.

14. The system of claim 12 wherein the remote device comprises a memory coupled to the transmitter and operable to store the first identifier and to provide the first identifier to the transmitter.

15. The system of claim 12 wherein:
the receiver is operable to receive from the remote device a second identifier that identifies a starting location; and
the processor is operable to determine the route from the starting location.

16. The system of claim 12 wherein:
the receiver is operable to receive from a source other than the remote device a second identifier that identifies a starting location; and
the processor is operable to determine the route from the starting location.

17. The system of claim 12 wherein the navigator comprises a global-positioning-system navigator.

18. The system of claim 12 wherein the remote device comprises a computer.

19. The system of claim 12 wherein the remote device comprises a telephone.

20. The system of claim 12 wherein the remote device comprises a personal digital assistant.

21. The system of claim 12, further comprising:
a vehicle; and
wherein the navigator is disposed in the vehicle.

22. A method, comprising:
receiving an identifier that identifies a location; and
sending the identifier to a navigator.

23. The method of claim 22, further comprising receiving data from the navigator after sending the identifier to the navigator.

24. The method of claim 22, further comprising storing the identifier remotely from the navigator before sending the identifier to the navigator.

25. The method of claim 22 wherein the identifier composes a portion of an electronic contact card.

26. A method, comprising:
receiving a first identifier that identifies a destination; and
determining a route to the destination.

27. The method of claim 26 wherein receiving the identifier comprises receiving the identifier from a data-storage medium.

28. The method of claim 26 wherein receiving the identifier comprises receiving the identifier from a remote source.

29. The method of claim 26, further comprising:
receiving a second identifier that identifies a starting location; and
determining the route from the starting location.

30. The method of claim 26, further comprising:
receiving coordinates of a current location from a global-positioning system;
determining the current location from the coordinates; and
determining the route from the determined current location.
